# FASCICULE DE BREVET EUROPEEN

(11) **EP 3 692 747 B1**
(45) Date de publication et mention de la délivrance du brevet: **26.07.2023**
(21) Numéro de dépôt: 18792982.3
(22) Date de dépôt: 01.10.2018
(51) Int. Cl.: H04W 48/20, H04M 1/67

(54) **TECHNIQUE DE GESTION D'UN DROIT D'ACCÈS À UN RÉSEAU POUR UN DISPOSITIF COMMUNICANT**
VERFAHREN ZUR VERWALTUNG EINER ZUGANGSBERECHTIGUNG ZU EINEM NETZWERK FÜR EINE KOMMUNIKATIONSVORRICHTUNG
TECHNIQUE FOR MANAGING A RIGHT OF ACCESS TO A NETWORK FOR A COMMUNICATING DEVICE

(30) Priorité: 04.10.2017 FR 1759261
(43) Date de publication de la demande: 12.08.2020
(73) Titulaire: Orange, 92130 Issy-les-Moulineaux (FR)
(72) Inventeur: CAZOULAT, Renaud, 92326 Châtillon (FR); DUCROT, Nicolas, 92326 Châtillon Cedex (FR)
(86) Numéro de dépôt international: PCT/FR2018/052414
(87) Numéro de publication internationale: WO 2019/069005

(56) Documents cités:
- US-A1- 2007 262 862
- US-A1- 2009 063 680
- US-A1- 2012 046 015
- ANGELOPOULOS CONSTANTINOS MARIOS ET AL: "Wireless energy transfer in sensor networks with adaptive, limited knowledge protocols", COMPUTER NETWORKS, ELSEVIER, AMSTERDAM, NL, vol. 70, 16 mai 2014 (2014-05-16), pages 113-141, XP029010086, ISSN: 1389-1286, DOI: 10.1016/J.COMNET.2014.04.022
- SAFAK BAYRAM I ET AL: "Electric Power Allocation in a Network of Fast Charging Stations", IEEE JOURNAL ON SELECTED AREAS IN COMMUNICATIONS, IEEE SERVICE CENTER, PISCATAWAY, US, vol. 31, no. 7, 1 juillet 2013 (2013-07-01), pages 1235-1246, XP011516377, ISSN: 0733-8716, DOI: 10.1109/JSAC.2013.130707

## Description

L'invention se rapporte au domaine général des télécommunications.

L'invention concerne plus particulièrement une technique de gestion d'un droit d'accès à un réseau pour un dispositif communicant.

La technique de gestion d'un droit d'accès à un réseau se situe dans le domaine des dispositifs communicants avec alimentation électrique par batterie rechargeable.

Par dispositif communicant ou connecté, on entend un dispositif apte à échanger des informations avec d'autres dispositifs. Dans ces dispositifs, on distingue ceux qui échangent des informations par l'intermédiaire d'un réseau de communication administré par un opérateur de réseau, avec selon les cas, un autre dispositif, un terminal de communication ou encore un équipement informatique du réseau de communication. Le réseau de communication peut s'appuyer sur des technologies de réseaux mobiles cellulaires dites 2G, 3G, 4G, 5G ainsi que des technologies de réseaux basse consommation et longue portée LPWA (pour « Low Power Wide Area ») tels que le réseau LoRa.

Du point de vue de l'utilisateur, la communication au moyen de réseaux dits longue portée se différencie de celle au moyen de réseaux dits faible portée (tels que Bluetooth, Bluetooth Low Energy, WiFi, Zigbee, Z-Wave, etc) par les avantages suivants :
- indépendance vis-à-vis d'un équipement intermédiaire pour accéder à un réseau de communication étendu ;
- sécurité : la plupart des technologies longue portée intègre intrinsèquement des caractéristiques de sécurité telles qu'une authentification, un chiffrement, qui offrent une garantie de sécurité native pour les applications mises en oeuvre sur ce réseau ;
- simplicité de configuration et d'utilisation : il n'y a pas besoin de configurer une clé de sécurité ou de réaliser un appairage, opérations qui peuvent se révéler extrêmement complexes pour l'utilisateur lorsque le dispositif n'intègre pas d'écran ou dispose de périphériques d'entrée/sortie limités, ou bien pour des utilisateurs n'étant pas habitués à utiliser ce type de technologies.

Pour connecter un dispositif communicant à un réseau de communication de longue portée, il est généralement nécessaire de souscrire à une offre auprès de l'opérateur du réseau de communication. Le dispositif communicant peut alors se connecter de façon autonome et transparente pour son utilisateur à des points d'accès du réseau de communication compatibles avec les moyens de communication du dispositif communicant.

Toutefois, il n'est souvent pas simple pour l'utilisateur du dispositif communicant de gérer le droit d'accès au réseau lui permettant d'accéder au réseau de l'opérateur. Un droit d'accès au réseau sous forme d'abonnement auprès de l'opérateur entraîne des frais récurrents. Un droit d'accès au réseau sous forme de crédit prépayé nécessite de renouveler ce crédit lorsqu'il a expiré.

La publication brevet US 2009/063680 décrit un réseau de distribution d'électricité intelligent dans lequel un dispositif connecté au réseau de distribution d'électricité peut être contrôlé au niveau électrique par un serveur de contrôle de flux.

Un des buts de l'invention est de remédier à des insuffisances/inconvénients de l'état de la technique et/ou d'y apporter des améliorations.

La présente invention est définie par l'objet des revendications indépendantes. Des modes de réalisation particuliers sont définis par les revendications dépendantes.

Selon un premier aspect, l'invention a pour objet un procédé de gestion d'un droit d'accès à un réseau pour un dispositif communicant, tel que décrit dans la revendication 1.

On appelle droit d'accès à un réseau de communication un droit d'usage ou d'utilisation du réseau. Tant que ce droit d'accès est valide, le dispositif communicant peut accéder au réseau et ainsi utiliser le réseau pour communiquer avec d'autres dispositifs.

Grâce à cette technique, le droit d'accès à un réseau est prolongé lors d'un acte de recharge de la batterie et en fonction d'une quantité d'énergie qui va recharger la batterie du dispositif communicant. L'acte de recharge de la batterie entraîne ainsi une prolongation d'un droit d'accès au réseau. Cette technique garantit ainsi au dispositif communicant un droit de communiquer au moyen d'un réseau tant que la batterie est en mesure de fournir de l'énergie électrique au dispositif.

Le parcours utilisateur est ainsi simplifié : pour conserver un accès à un réseau de communication, l'utilisateur ne doit pas gérer de renouvellement de son droit d'accès au réseau. Il suffit à l'utilisateur de brancher son dispositif communicant sur un appareil de recharge à la fois pour le recharger et pour prolonger son droit d'accès au réseau. L'utilisateur ne doit pas veiller au maintien de sa souscription auprès de l'opérateur de réseau.

Cette technique de gestion d'un droit d'accès à un réseau est particulièrement bien adaptée pour être mise en oeuvre dans des dispositifs communicants, car ceux-ci sont très souvent alimentés en énergie par des batteries rechargeables, afin de pouvoir être facilement déplacés.

Le parcours utilisateur est connu et maîtrisé de bout en bout par une très grande partie des consommateurs et utilisateurs finaux : il suffit de recharger la batterie du dispositif. Une telle technique est susceptible de faciliter et d'encourager l'émergence de nouveaux dispositifs communicants au sein de l'industrie de l'Internet des Objets, de par les problèmes et freins qu'elle supprime en ce qui concerne l'accès au réseau de communication longue portée. Ces freins sont aussi bien techniques que commerciaux, en ce qui concerne la complexité à gérer la souscription d'un droit d'accès au réseau d'un dispositif communicant.

Aucune modification n'est apportée à l'appareil de recharge qui est connecté au dispositif communicant. N'importe quel appareil de recharge peut être utilisé.

Dans un mode de réalisation particulier, la batterie rechargeable est inamovible.

Les différents modes ou caractéristiques de réalisation mentionnés ci-après peuvent être ajoutés indépendamment ou en combinaison les uns avec les autres, au procédé de gestion tel que défini précédemment.

Dans un mode de réalisation particulier du procédé de gestion, lorsque la batterie est déchargée, l'accès au réseau du dispositif communicant est restreint à l'envoi à destination du dispositif de traitement.

Lorsque la batterie est déchargée, le droit d'accès au réseau n'est plus disponible en dehors d'une communication à destination du dispositif de traitement. Ceci renforce la sécurité du procédé de gestion du droit d'accès au service.

Dans un mode de réalisation particulier, le procédé de gestion comprend une obtention par le dispositif communicant de l'identifiant de batterie.

Dans un mode de réalisation particulier, le droit d'accès au réseau est prolongé pour une qualité de service sélectionnée par un utilisateur associé à un identifiant réseau du dispositif communicant, permettant de prolonger le droit d'accès au réseau pour l'identifiant réseau associé.

L'utilisateur peut ainsi sélectionner une qualité de service lors de la prolongation du droit d'accès au réseau. Cette qualité de service est associée à une fréquence d'accès au réseau ou fréquence d'usage du réseau. Le parcours utilisateur est ainsi simplifié.

Dans un mode de réalisation particulier, l'accord de rechargement est conditionné à un accord d'un utilisateur associé à un identifiant réseau du dispositif communicant, permettant de prolonger le droit d'accès au réseau pour l'identifiant réseau associé.

Ceci permet de garantir un accord de l'utilisateur associé à la souscription du dispositif communicant. Cet utilisateur est en effet celui qui va régler la facture de l'opérateur de réseau associée à la souscription.

Selon un deuxième aspect, l'invention concerne un dispositif communicant destiné à être alimenté électriquement par une batterie rechargeable, tel que décrit dans la revendication 6.

Les avantages énoncés pour le procédé de gestion de droit d'accès à un réseau selon le premier aspect sont transposables directement au dispositif communicant.

Ce dispositif peut bien entendu comporter en termes structurels les différentes caractéristiques relatives au procédé de gestion tel que décrit précédemment, qui peuvent être combinées ou prises isolément.

Selon un troisième aspect, l'invention concerne un programme pour un dispositif communicant, comprenant des instructions de code de programme destinées à commander l'exécution de celles des actions du procédé de gestion de droit d'accès à un réseau précédemment décrit mises en oeuvre par le dispositif communicant, lorsque ce programme est exécuté par ce dispositif et un support d'enregistrement lisible par un dispositif sur lequel est enregistré un programme pour un dispositif.

Les avantages énoncés pour le procédé de gestion de droit d'accès à un réseau selon le premier aspect sont transposables directement au programme pour un dispositif communicant et au support d'enregistrement.

La technique de gestion d'un droit d'accès à un réseau d'un dispositif communicant sera mieux comprise à l'aide de la description suivante de modes de réalisation particuliers, en référence aux dessins annexés sur lesquels :
- la figure 1 représente un dispositif communicant dans son environnement dans un mode de réalisation particulier ;
- la figure 2 représente un dispositif communicant dans un mode de réalisation particulier ;
- la figure 3 illustre des étapes d'un procédé de gestion d'un droit d'accès à un réseau selon un mode particulier de réalisation.

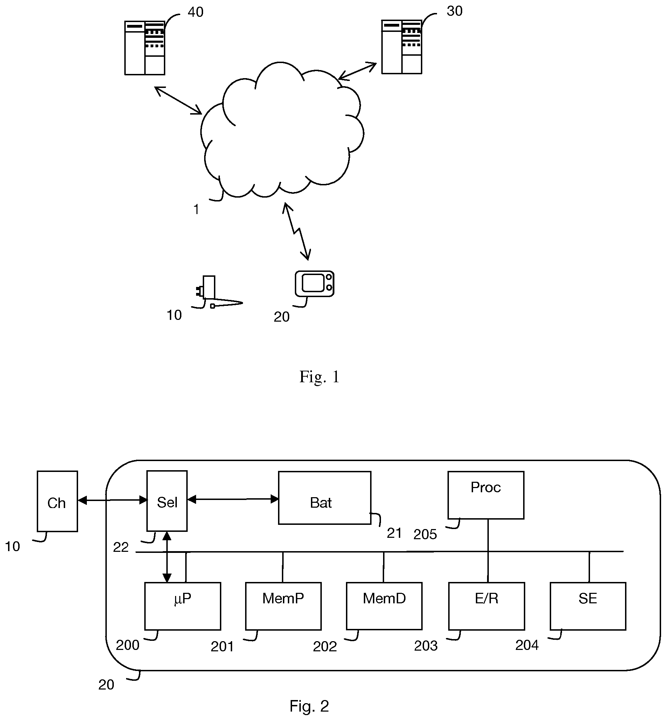

La **figure 1** représente un environnement dans lequel est mis en oeuvre le procédé de de gestion d'un droit d'accès à un réseau dans un mode de réalisation particulier. L'environnement représenté comprend un dispositif communicant 20 accédant à un réseau de communication par l'intermédiaire d'un réseau d'accès mobile 1. Un dispositif ou objet communicant ou connecté, est un objet adapté pour échanger des informations par l'intermédiaire d'un réseau de communication, avec selon les cas, un autre objet, un terminal de communication ou encore un équipement informatique du réseau de communication. Ainsi, un terminal mobile, une montre adaptée pour transmettre des informations à un terminal mobile via un réseau de communication étendu tel que le réseau Internet, un détecteur de fumée adapté pour communiquer avec un terminal mobile distant afin de signaler la présence de fumée dans une maison constituent des exemples d'objets connectés. Dans un premier exemple, le dispositif communicant 20 est un boitier de surveillance médicale, adapté pour mesurer des caractéristiques physiques de l'utilisateur qui le porte, par exemple son rythme cardiaque et pour transmettre des mesures à un dispositif informatique distant par l'intermédiaire d'un réseau de communication (non représenté sur la figure 1). Dans un deuxième exemple, le dispositif communicant 20 est un boitier de géolocalisation, adapté pour transmettre des données de géolocalisation à un dispositif informatique distant par l'intermédiaire d'un réseau de communication.

Le réseau d'accès mobile correspond par exemple à un réseau de communication mobile de type GSM, EDGE, 3G, 3G+ ou 4G (également appelé LTE pour « Long Term Evolution »)... Le réseau d'accès mobile peut également correspondre à un réseau basse consommation et longue portée LPWA (pour « Low Power Wide Area ») tel que le réseau LoRa.

On appelle « droit d'accès à un réseau » une donnée de souscription gérée par un opérateur de réseau permettant au dispositif communicant 20 d'accéder à un réseau. Cette donnée de souscription dépend de la technologie d'accès du réseau de communication auquel le dispositif communicant 20 doit accéder. Ce droit d'accès au réseau est ainsi géré par l'opérateur de réseau. Ce droit d'accès à un réseau correspond à un droit d'usage ou d'utilisation du réseau. Tant que ce droit d'accès est valide, le dispositif communicant peut accéder au réseau et ainsi communiquer avec d'autres dispositifs.

Dans le mode de réalisation représenté, le dispositif communicant 20 envoie des données à un serveur 40. Ce serveur 40 est agencé pour fournir un service à partir des données reçues. Ce service peut correspondre par exemple à un service de santé, un service d'aide à la personne, un service de localisation. Pour ce service de localisation, les données envoyées sont relatives à une position géographique. Un dispositif de traitement 30 est agencé pour gérer ce service. A ce titre, il est agencé pour interagir avec le dispositif communicant 20, avec un utilisateur du service et avec des dispositifs de l'opérateur du réseau de communication mobile. Ces interactions sont décrites ultérieurement en relation avec la description du procédé de gestion d'un droit d'accès à un réseau.

Le dispositif communicant 20 peut être tout type de terminal permettant de transmettre des données, tels qu'un téléphone portable, un téléphone intelligent (« smartphone » en anglais), une tablette, un objet connecté.

Ce dispositif communicant 20 comprend une batterie et est rechargeable par un appareil de recharge 10.

Le dispositif de traitement 30 est en particulier agencé pour recevoir des messages qui lui sont destinés. Dans un mode de réalisation particulier, ces messages correspondent à des messages courts envoyés à un numéro téléphonique associé au dispositif de traitement 30. Dans un autre mode de réalisation particulier, ces messages prennent la forme d'un message pour un service supplémentaire pour données non structurées USSD (pour « Unstructured Suplementary Service Data ») associé au dispositif de traitement 30. Dans un autre mode de réalisation particulier, ces messages prennent la forme d'une requête de type http (pour « HyperText Transfer Protocol ») envoyée à une adresse de localisation URL (pour « Uniform Resource Locator ») associée au dispositif de traitement 30. Aucune limitation n'est attachée à la manière dont ces messages sont envoyés à destination du dispositif de traitement 30.

La **figure 2** illustre de manière schématique un dispositif communicant 20 et un appareil de recharge 10 dans un mode de réalisation particulier.

L'appareil de recharge 10 comprend notamment des moyens agencés pour alimenter en énergie électrique une batterie à recharger par l'intermédiaire d'un connecteur du dispositif communicant (non représenté sur la figure 1).

Le format de la batterie peut être basé sur un standard existant de batterie, tel que LR6, LR3, LR14, 6LR61, CR2032, CR2016, CR2012, CR1220, etc... Dans un autre mode de réalisation particulier, le format du module d'alimentation électrique peut être basé sur un format de batterie spécifique au dispositif communicant, adapté à son usage, en particulier aux besoins de format, de consommation d'énergie et de connectivité de celui-ci.

Le dispositif communicant 20, tel que représenté à la figure 2, comprend notamment :
- une batterie rechargeable 21 ;
- un circuit de sélection 22 ;
- un processeur 200 pour exécuter des instructions de code de modules logiciels ;
- une zone mémoire 201, agencée pour mémoriser un programme qui comprend des instructions de code pour mettre en oeuvre des étapes du procédé de gestion ;
- une mémoire de stockage 202, agencée pour stocker des données utilisées lors de la mise en oeuvre du procédé de gestion ;
- un module de communication 203, formant une interface de communication avec un réseau de communication, agencé pour communiquer avec des dispositifs d'un réseau de communication ;
- un élément de sécurité 204 ;
- un module de traitement 205.

La batterie rechargeable 21 est insérée dans un réceptacle du dispositif communicant 20. Le réceptacle est par exemple moulé et accessible en retirant une coque du dispositif communicant 20. Dans un mode de réalisation particulier, la batterie est inamovible.

Le circuit de sélection 22 est par exemple un circuit intégré tel que le composant MCP73831T-2ATI/OT du fabricant Microchip.

Le circuit de sélection 22 est agencé pour recevoir en entrée le courant électrique :
- en provenance de l'appareil de recharge 10 par une première entrée, lorsqu'il est connecté au dispositif communicant 20 au moyen du connecteur prévu à cet effet ;
- en provenance de la batterie 21 par une deuxième entrée, lorsqu'aucun appareil de recharge n'est connecté au dispositif (sous réserve bien entendu que la batterie soit chargée).

Le circuit de sélection 22 est agencé pour distribuer le courant électrique reçu vers :
- une première sortie, à laquelle est connectée la batterie 21, et
- une deuxième sortie, à laquelle sont connectés les composants du dispositif communicant 20.

Le circuit de sélection 22 est agencé pour être commandé par le module de traitement 205. Dans un premier mode de distribution, le circuit de sélection 22 distribue le courant électrique reçu de l'appareil de recharge par la première entrée uniquement vers la deuxième sortie : la batterie 21 n'est pas en charge. Dans un deuxième mode de distribution, le circuit de sélection 22 distribue le courant électrique reçu de l'appareil de recharge par la première entrée vers les première et deuxième sorties : la batterie 21 est en cours de recharge. Le circuit de sélection 22 est ainsi piloté par le module de traitement 205 pour basculer du premier mode de distribution au deuxième mode de distribution, et réciproquement.

Lorsqu'aucun appareil de recharge n'est connecté au dispositif communicant, dans un troisième mode de distribution, le circuit de sélection 22 est agencé pour distribuer le courant électrique reçu de la batterie 21 par la deuxième entrée vers la deuxième sortie, pour alimenter les composants du dispositif communicant.

Le module de communication 203 correspond à un module d'émission/réception fonction de la technologie d'accès radio.

L'élément de sécurité 204 est une plateforme dédiée inviolable, comprenant du matériel et du logiciel, apte à héberger de manière sécurisée des applications et leurs données confidentielles et cryptographiques et fournissant un environnement d'exécution d'applications sécurisé, par exemple une carte de type UICC.

Dans un mode de réalisation particulier, l'élément de sécurité 204 est de type carte eUICC (de l'anglais « embedded Universal Integrated Circuit Card »), également appelée « eSIM » (de l'anglais « embedded Subscriber Identity Module »), ou carte SIM embarquée ou inamovible, tel qu'en cours de spécification technique dans le cadre de l'association GSMA.

Lorsque le réseau de communication est un réseau mobile, l'élément de sécurité 204 peut correspondre à une carte SIM classique qui a été configurée au préalable auprès d'un opérateur de réseau. Toujours pour ce même type de réseau de communication, l'élément de sécurité 204 peut correspondre à une carte SIM programmable à distance, c'est-à-dire configurable à distance ou « over the air ». Cette technique est connue sous le terme de post-allocation à distance d'un profil d'accès d'un élément de sécurité. Un profil d'accès a été généré par un serveur de gestion de données de souscription, non représenté sur la figure 1, lié à l'opérateur. Le profil d'accès comprend une application d'accès au réseau et des données d'accès associées (on parle de « credentials » en anglais), telles que des clés cryptographiques et des algorithmes. Le profil d'accès une fois installé dans l'élément de sécurité 204 permet un accès à une infrastructure d'un réseau mobile donné sous réserve d'un droit d'accès valide. Il permet notamment d'authentifier le dispositif communicant 20, plus précisément l'élément de sécurité 204 lors d'un accès au réseau de l'opérateur.

Lorsque le réseau de communication est un réseau de type longue portée et basse consommation, par exemple LoRA, une donnée d'accès correspond à une clé de communication qui permet au dispositif communicant 20 de s'authentifier auprès d'équipements du réseau de communication. A titre d'exemple illustratif, la donnée d'accès est la clé réseau LoRa, appelée « Network Key ». Cette clé réseau permet à l'élément de sécurité 204 de calculer une ou plusieurs clés de session, appelées « Network Session Key ».

L'élément de sécurité 204 est associé à un identifiant réseau. Cet identifiant réseau permet d'identifier un souscripteur pour l'accès au réseau. Pour un réseau mobile de type 2G, 3G, 4G, cet identifiant unique peut par exemple correspondre à une identité internationale d'abonné mobile IMSI (pour « International Mobile Subscriber Identity »). Pour un réseau de type longue portée et basse consommation, par exemple LoRA, cet identifiant unique peut par exemple correspondre à l'identifiant unique du dispositif DevEUI.

Un identifiant de batterie est associé à la batterie 21. Cet identifiant de batterie correspond par exemple à un identifiant unique de type IEEE EUI-48 (pour « Extended Unique Identifier »). Cet identifiant unique est un nombre codé sur 48 bits permettant d'identifier notamment le constructeur et la batterie.

La batterie 21 est en particulier agencée pour fournir au module de traitement 205 son niveau d'énergie résiduelle.

Dans un mode de réalisation particulier, la batterie 21 est également agencée pour fournir son identifiant de batterie au module de traitement 205, éventuellement sur demande de ce dernier.

Il est ici souligné que le dispositif communicant 20 comprend également d'autres modules de traitement, non représentés sur la figure 2, agencés pour mettre en oeuvre les différentes fonctions de dispositif communicant. Pour le deuxième exemple de réalisation, il s'agit en particulier d'un module de géolocalisation.

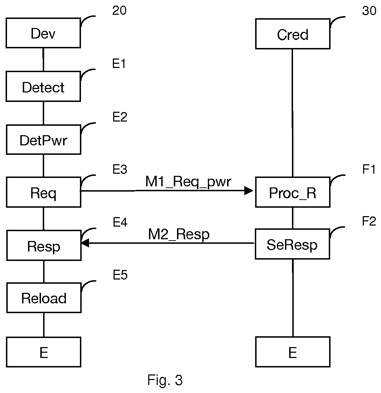

Le procédé de gestion d'un droit d'accès au réseau mis en oeuvre par le dispositif communicant va maintenant être décrit en relation avec la **figure 3****.**

A l'état initial, le dispositif communicant 20 est alimenté par sa batterie 21. Le circuit de sélection 22 est ainsi positionné dans le troisième mode de distribution.

Le dispositif communicant 20 détecte (étape E1) que l'appareil de recharge 10 lui est connecté. Cette connexion peut être réalisée par un utilisateur du dispositif 20, indépendamment de l'énergie résiduelle de la batterie 21. Le dispositif communicant 20 commande le circuit de sélection 22 vers le premier mode de distribution : la batterie 21 n'est pas en cours de recharge.

Le dispositif communicant 20 détermine (étape E2) alors une estimation d'une quantité d'énergie à délivrer par l'appareil de recharge 10. Cette quantité d'énergie est estimée en fonction de l'énergie résiduelle de la batterie 21 et de la capacité nominale de celle-ci.

Le dispositif communicant 20 envoie (étape E3) une demande de rechargement (M1) à destination du dispositif de traitement 30. Cette demande de rechargement M1 comprend l'estimation d'une quantité d'énergie demandée et un identifiant de batterie. L'identifiant de batterie correspond à celui de la batterie 21 et est obtenu par le dispositif communicant 20 par configuration ou bien lors de la mise sous tension du dispositif ou bien encore sur demande à la batterie 21.

Cette demande de rechargement M1 est reçue (étape F1) par le dispositif de traitement 30.

Le dispositif de traitement 30 interagit alors avec des dispositifs du réseau de communication afin de prolonger le droit d'accès au réseau du dispositif communicant en fonction de la quantité d'énergie demandée. Le droit d'accès au réseau du dispositif communicant 20 est identifié par un identifiant réseau du dispositif communicant. Cet identifiant réseau permet d'identifier le droit d'accès au réseau et de prolonger ainsi le droit d'accès au réseau dans les dispositifs du réseau de l'opérateur.

Le dispositif de traitement 30 envoie (étape F2) alors au dispositif communicant 20 un accord de rechargement M2 comprenant une quantité d'énergie accordée. Cet accord de rechargement M2 est reçu (étape E4) par le dispositif communicant 20.

Le dispositif communicant 20 commande le circuit de sélection 22 vers le deuxième mode de distribution : la batterie 21 est en cours de recharge. Le dispositif communicant 20 supervise par ailleurs la quantité d'énergie délivrée par l'appareil de recharge 10 en fonction de la quantité d'énergie accordée.

Ainsi, le dispositif communicant 20 bénéficie d'un droit d'accès réseau qui est prolongé en fonction de la quantité d'énergie accordée. Le parcours utilisateur est facilité en ce qui concerne la gestion du droit d'accès au réseau de son dispositif communicant 20.

Dans un mode de réalisation particulier, lorsque la batterie est déchargée, l'accès au réseau du dispositif communicant 20 est restreint à l'envoi à destination du dispositif de traitement 30. Tout envoi à destination d'un autre dispositif que le dispositif de traitement est bloqué. Ceci permet de garantir à l'opérateur du réseau de communication que l'accès au réseau de communication est contrôlé tant que le droit d'accès au réseau n'est pas prolongé. Une connexion de l'appareil de recharge 10 ne permet pas au dispositif communicant d'accéder de nouveau au réseau. De plus, l'accès au réseau restreint permet au dispositif communicant 20 de déclencher la prolongation du droit d'accès au réseau, permettant de lever cette restriction d'accès réseau. Le parcours utilisateur est de nouveau facilité puisque les démarches pour prolonger le droit d'accès au réseau auprès de l'opérateur du réseau sont initiées à partir du dispositif communicant 20.

L'identifiant réseau du dispositif communicant 20 est utilisé pour prolonger le droit d'accès au réseau. Cet identifiant réseau permet à l'opérateur du réseau d'identifier la souscription de l'utilisateur. Cet identifiant réseau est envoyé par le dispositif communicant 20 avec la demande de rechargement M1. Ainsi, le dispositif de traitement 30 obtient directement l'identifiant réseau à partir de la demande de rechargement.

Dans un autre mode de réalisation particulier, qui ne relève pas de l'invention et n'est présent qu'à titre illustratif, lors d'une phase d'enregistrement, le dispositif communicant 20 transmet au dispositif de traitement 30 l'identifiant de batterie de sa batterie 21 et l'identifiant réseau. Le dispositif de traitement 30 mémorise alors cette association entre l'identifiant de batterie et l'identifiant réseau. Lors du traitement de la demande de rechargement M1, le dispositif de traitement 30 lit alors l'identifiant réseau associé à l'identifiant de batterie. Ainsi, le dispositif de traitement 30 obtient l'identifiant réseau à partir de l'identifiant de batterie reçu dans la demande de rechargement.

Dans encore un autre mode de réalisation particulier, qui ne relève pas de l'invention et n'est présent qu'à titre illustratif, lors d'une phase d'enregistrement, le dispositif communicant 20 transmet au dispositif de traitement 30 l'identifiant réseau et un identifiant de service, par exemple un alias. Le dispositif de traitement 30 mémorise alors cette association entre l'identifiant de service et l'identifiant réseau. Lors du traitement de la demande de rechargement M1, le dispositif de traitement 30 lit alors l'identifiant réseau associé à l'identifiant de service. Ainsi, le dispositif de traitement 30 obtient l'identifiant réseau à partir de l'identifiant de service reçu dans la demande de rechargement.

Dans le mode de réalisation décrit précédemment, à l'étape F1, le dispositif de traitement 30 interagit avec des dispositifs du réseau de communication afin de prolonger le droit d'accès au réseau du dispositif communicant en fonction de la quantité d'énergie. Cette prolongation peut être soumise à un accord préalable de l'utilisateur auquel la souscription (et donc l'identifiant réseau) est associée. Cet accord préalable peut s'effectuer au moyen d'une interface homme-machine d'un dispositif de cet utilisateur, par exemple son terminal mobile. L'accord de rechargement envoyé au dispositif communicant 20 est conditionné à un accord de l'utilisateur. Ceci permet de garantir que le souscripteur du contrat autorise bien le rechargement de la batterie, et par conséquent la prolongation du droit d'accès au réseau. Ainsi lorsque le dispositif communicant 20 n'est plus en possession de cet utilisateur et la batterie est déchargée, le droit d'accès au réseau n'est plus valide.

Dans un mode de réalisation particulier, l'utilisateur est également sollicité afin de sélectionner une qualité de service pour la prolongation du droit d'accès au réseau. Une qualité de service définit en particulier la fréquence d'accès au réseau ou la fréquence d'usage du réseau par le dispositif communicant. L'utilisateur est alors facturé en fonction de la qualité de service sélectionnée. A titre illustratif, pour un service tel que celui de géolocalisation, la qualité de service est définie en fonction de la fréquence d'envoi des positions de géolocalisation. Toujours à titre illustratif, pour un service tel qu'un service d'aide à la personne, la qualité de service est définie en fonction de la fréquence d'envoi de mesures médicales.

Les modes de réalisation qui ont été décrits s'appuient sur une unique batterie 21. Certains dispositifs communicants peuvent nécessiter de combiner plusieurs batteries rechargeables. Les modes de réalisation sont aisément transposables à cette combinaison de batteries. L'énergie électrique est estimée pour la combinaison de batteries. Un seul identifiant de batterie peut être fourni dans la demande de rechargement.

En complément de la prolongation du droit d'accès au réseau, un droit d'accès à un service peut également être prolongé par cette technique de gestion. Le droit d'accès à un service correspond par exemple à :
- un accès à une ou des données disponibles sur un serveur à distance ;
- un accès à une application ou un ensemble d'applications sur un serveur à distance.

On comprend que cette technique de gestion d'un droit d'accès au réseau permet de simplifier l'expérience des utilisateurs de dispositif communicant. Il suffit en effet à un utilisateur de connecter le dispositif communicant à un appareil de recharge pour prolonger le droit d'accès réseau du dispositif communicant en fonction de l'énergie délivrée. Aucune démarche n'est à effectuer auprès d'un opérateur. L'utilisateur renouvelle l'énergie électrique de son dispositif communicant et simultanément le droit d'accès à un réseau.

Aucune limitation n'est attachée à ces différents modes de réalisation et l'homme du métier est à même d'en définir d'autres prolongeant un droit d'accès à un réseau en fonction d'une énergie électrique à délivrer par un appareil de recharge.

La technique de gestion d'un droit d'accès au réseau est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, le module de traitement 205 est agencé pour mettre en oeuvre celles des étapes du procédé de gestion d'un droit d'accès précédemment décrit, mises en oeuvre par le dispositif communicant. Il s'agit de préférence de modules logiciels comprenant des instructions logicielles pour faire exécuter celles des étapes (ou des actions) du procédé de gestion précédemment décrit, mises en oeuvre par un dispositif communicant. L'invention concerne donc aussi :
- un programme pour un dispositif communicant, comprenant des instructions de code de programme destinées à commander l'exécution de celles des étapes (ou des actions) du procédé de gestion précédemment décrit, lorsque ledit programme est exécuté par ce dispositif communicant ;
- un support d'enregistrement lisible par un dispositif communicant sur lequel est enregistré le programme pour un dispositif communicant.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

Ainsi le module de traitement 205 est configuré pour mettre en oeuvre le procédé selon les revendications 1 à 5.

## Revendications

1. Procédé de gestion d'un droit d'accès à un réseau d'accès mobile pour un dispositif communicant (20), ledit procédé comprenant les étapes suivantes mises en oeuvre par le dispositif communicant :
- une détection (E1) que le dispositif communicant (20) est connecté à un appareil de recharge (10) ;
- suite à ladite détection, un envoi (E3) d'une demande de rechargement à destination d'un dispositif de traitement (30), ladite demande de rechargement (M1) comprenant une estimation d'une quantité d'énergie demandée, un identifiant de batterie et un identifiant réseau du dispositif communicant ;
- sur réception (E4) d'un accord de rechargement (M2) en provenance du dispositif de traitement, une alimentation (E5) de la batterie identifiée par l'appareil de recharge en fonction de la quantité d'énergie accordée,
- un accès audit réseau par le dispositif communicant identifié par ledit identifiant réseau, ledit droit d'accès étant prolongé dans le réseau en fonction de la quantité d'énergie accordée.

2. Procédé de gestion selon la revendication 1, dans lequel lorsque la batterie est déchargée, l'accès au réseau du dispositif communicant est restreint à l'envoi de messages à destination du dispositif de traitement.

3. Procédé de gestion selon la revendication 1, comprenant une obtention par le dispositif communicant de l'identifiant de batterie.

4. Procédé de gestion selon la revendication 1, dans lequel le droit d'accès au réseau est prolongé pour une qualité de service sélectionnée par un utilisateur associé à un identifiant réseau du dispositif communicant, permettant de prolonger le droit d'accès au réseau pour l'identifiant réseau associé.

5. Procédé de gestion selon la revendication 1, dans lequel l'accord de rechargement est conditionné à un accord d'un utilisateur associé à un identifiant réseau du dispositif communicant, permettant de prolonger le droit d'accès au réseau pour l'identifiant réseau associé.

6. Dispositif communicant (20) destiné à être alimenté électriquement par une batterie rechargeable (21), ledit dispositif comprenant :
- un module de communication (203), agencé pour communiquer avec des dispositifs d'un réseau de communication par l'intermédiaire d'un réseau d'accès mobile ;
- un module de traitement (205), agencé pour :
- détecter une connexion à un appareil de recharge (10) ;
- suite à ladite détection, envoyer une demande de rechargement à destination d'un dispositif de traitement (30), ladite demande de rechargement comprenant une estimation d'une quantité d'énergie demandée, un identifiant de batterie et un identifiant réseau du dispositif communicant ;
- sur réception d'un accord de rechargement en provenance du dispositif de traitement, alimenter la batterie identifiée par l'appareil de recharge en fonction de la quantité d'énergie accordée,
- accéder au réseau d'accès en étant identifié par ledit identifiant réseau, ledit droit d'accès étant prolongé dans le réseau en fonction de la quantité d'énergie accordée.

7. Programme pour un dispositif communicant, comprenant des instructions de code de programme destinées à commander l'exécution de celles des actions du procédé de gestion selon l'une des revendications 1 à 5 mises en oeuvre par le dispositif, lorsque ledit programme est exécuté par ledit dispositif.

8. Support d'enregistrement lisible par un dispositif communicant sur lequel est enregistré le programme selon la revendication 7.

## Patentansprüche

1. Verfahren zur Verwaltung einer Zugangsberechtigung zu einem Funkzugangsnetz für eine Kommunikationsvorrichtung (20), wobei das Verfahren die folgenden Schritte beinhaltet, die durch die Kommunikationsvorrichtung umgesetzt werden:
- Detektieren (E1), dass die Kommunikationsvorrichtung (20) mit einem Wiederaufladegerät (10) verbunden ist;
- im Anschluss an das Detektieren, Senden (E3) einer Wiederaufladeanforderung an eine Verarbeitungseinheit (30), wobei die Wiederaufladeanforderung (M1) eine Schätzung einer geforderten Energiemenge, eine Batteriekennung und eine Netzkennung der Kommunikationsvorrichtung beinhaltet;
- bei Empfang (E4) einer Wiederaufladezustimmung (M2) von der Verarbeitungseinheit, Versorgen (E5) der identifizierten Batterie durch das Wiederaufladegerät in Abhängigkeit von der gewährten Energiemenge,
- Zugang zu dem Netz durch die Kommunikationsvorrichtung, die durch die Netzkennung identifiziert wurde, wobei die Zugangsberechtigung in Abhängigkeit von der gewährten Energiemenge in dem Netz verlängert wird.

2. Verwaltungsverfahren nach Anspruch 1, wobei, wenn die Batterie entladen ist, der Netzzugang der Kommunikationsvorrichtung auf das Senden von Nachrichten an die Verarbeitungseinheit beschränkt ist.

3. Verwaltungsverfahren nach Anspruch 1, das ein Erhalten der Batteriekennung durch die Kommunikationsvorrichtung beinhaltet.

4. Verwaltungsverfahren nach Anspruch 1, wobei die Zugangsberechtigung zu dem Netz für eine Servicequalität verlängert wird, die durch einen Benutzer, der mit einer Netzkennung der Kommunikationsvorrichtung assoziiert ist, ausgewählt wird, was es gestattet, die Zugangsberechtigung zu dem Netz für die assoziierte Netzkennung zu verlängern.

5. Verwaltungsverfahren nach Anspruch 1, wobei die Wiederaufladezustimmung einer Zustimmung eines Benutzers, der mit einer Netzkennung der Kommunikationsvorrichtung assoziiert ist, unterliegt, was es gestattet, die Zugangsberechtigung zu dem Netz für die assoziierte Netzkennung zu verlängern.

6. Kommunikationsvorrichtung (20), die dazu bestimmt ist, von einer wiederaufladbaren Batterie (21) mit Strom versorgt zu werden, wobei die Vorrichtung Folgendes beinhaltet:
- ein Kommunikationsmodul (203), das dazu angeordnet ist, über ein Funkzugangsnetz mit Vorrichtungen eines Kommunikationsnetzes zu kommunizieren;
- ein Verarbeitungsmodul (205), das zu Folgendem angeordnet ist:
- Detektieren einer Verbindung zu einem Wiederaufladegerät (10);
- im Anschluss an das Detektieren, Senden einer Wiederaufladeanforderung an eine Verarbeitungseinheit (30), wobei die Wiederaufladeanforderung eine Schätzung einer geforderten Energiemenge, eine Batteriekennung und eine Netzkennung der Kommunikationsvorrichtung beinhaltet;
- bei Empfang einer Wiederaufladezustimmung von der Verarbeitungseinheit, Versorgen der identifizierten Batterie durch das Wiederaufladegerät in Abhängigkeit von der gewährten Energiemenge,
- Zugang zu dem Zugangsnetz auf Basis der Identifizierung durch die Netzkennung, wobei die Zugangsberechtigung in Abhängigkeit von der gewährten Energiemenge in dem Netz verlängert wird.

7. Programm für eine Kommunikationsvorrichtung, das Programmcodeanweisungen beinhaltet, die dazu bestimmt sind, die Ausführung derjenigen der Aktionen des Verwaltungsverfahrens nach einem der Ansprüche 1 bis 5, die durch die Vorrichtung umgesetzt werden, zu steuern, wenn das Programm durch die Vorrichtung ausgeführt wird.

8. Durch eine Kommunikationsvorrichtung lesbares Aufzeichnungsmedium, auf dem das Programm nach Anspruch 7 aufgezeichnet ist.

## Claims

1. Method for managing a right of access to a mobile access network for a communicating device (20), said method comprising the following steps implemented by the communicating device:
- detection (E1) that the communicating device (20) is connected to a charging unit (10);
- following said detection, transmission (E3) of a charging request to a processing device (30), said charging request (M1) comprising an estimate of a requested amount of energy, a battery identifier and a network identifier of the communicating device;
- on receipt (E4) of a charging agreement (M2) from the processing device, supply (E5) of the battery identified by the charging unit with power according to the agreed amount of energy,
- access to said network by the communicating device identified by said network identifier, said right of access being extended in the network according to the agreed amount of energy.

2. Management method according to Claim 1, wherein, once the battery is discharged, the access of the communicating device to the network is restricted to transmission of messages to the processing device.

3. Management method according to Claim 1, comprising the communicating device obtaining the battery identifier.

4. Management method according to Claim 1, wherein the right of access to the network is extended for a quality of service selected by a user associated with a network identifier of the communicating device, making it possible to extend the right of access to the network for the associated network identifier.

5. Management method according to Claim 1, wherein the charging agreement is conditional on agreement of a user associated with a network identifier of the communicating device, making it possible to extend the right of access to the network for the associated network identifier.

6. Communicating device (20) intended to be supplied with power by a rechargeable battery (21), said device comprising:
- a communication module (203), designed to communicate with devices of a communication network via a mobile access network;
- a processing module (205), designed to:
- detect a connection to a charging unit (10);
- following said detection, transmit a charging request to a processing device (30), said charging request comprising an estimate of a requested amount of energy, a battery identifier and a network identifier of the communicating device;
- on receipt of a charging agreement from the processing device, supply the battery identified by the charging unit with power according to the agreed amount of energy,
- access the access network on being identified via said network identifier, said right of access being extended in the network according to the agreed amount of energy.

7. Program for a communicating device, comprising program code instructions intended to command the execution of those of the actions of the management method according to one of Claims 1 to 5 that are implemented by the device, when said program is executed by said device.

8. Recording medium able to be read by a communicating device and on which the program according to Claim 7 is recorded.
